# DEMANDE DE BREVET EUROPEEN

(11) **EP 1 156 263 A1**
(43) Date de publication de la demande: **21.11.2001**
(21) Numéro de dépôt: 01401029.2
(22) Date de dépôt: 23.04.2001
(51) Int. Cl.: F17C 3/08, A23L 3/3589, F17C 13/00

(54) **Bac d'immersion de produits notamment alimentaires dans un liquide cryogénique**

(30) Priorité: 17.05.2000 FR 0006292
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Disdier, Jean-Marie, 20020 Arese (IT)
(74) Mandataire: Mellul-Bendelac, Sylvie Lisette

(57) **Abrégé**

Bac (1) d'immersion de produits notamment alimentaires dans un liquide cryogénique, comprenant un bac intérieur (2) disposé dans un bac extérieur (3) avec entre les parois de ces deux bacs un volume intercalaire (V) destiné à être mis sous vide, caractérisé en ce que le volume intercalaire contient une structure de renfort (13, 16, 17) régulièrement répartie sur sensiblement l'ensemble de la surface des parois des deux bacs, de manière à maintenir constant l'espacement entre les parois. La structure de renfort est avantageusement constituée par des plaques en nid d'abeille (13, 16, 17), solidarisées par exemple par collage avec les parois du bac intérieur (1) et libres par rapport aux parois du bac extérieur (3), ces structures présentant des orifices pour le passage d'une goulotte d'alimentation (6) en liquide cryogénique et d'une vanne de purge (11). La disposition de ces structures de renfort entre les deux bacs (1, 2) permet de diminuer l'épaisseur des tôles de ceux-ci et donc d'améliorer leurs performances thermiques, de conserver les différentes faces du bac parfaitement planes après la mise sous vide, en évitant tout flambage des parois sous la pression de la poussée atmosphérique après la mise sous vide.

## Description

La présente invention a pour objet un bac d'immersion de produits notamment alimentaires dans un liquide cryogénique, du type comprenant un bac intérieur disposé dans un bac extérieur avec entre les parois de ces deux bacs un volume intercalaire destiné à être mis sous vide.

Les chaînes de fabrication de produits alimentaires tels que des crèmes glacées ayant un système de préhension comprennent de tels bacs remplis d'azote liquide, dans lesquels chaque produit avec son système de préhension est immergé pendant quelques secondes avant le traitement suivant.

Afin de pouvoir résister à la poussée de la pression atmosphérique, ces bacs isolés sous vide, de configuration généralement parallépipédique, ont leurs parois planes renforcées par des structures disposées à intervalles réguliers dans le volume intercalaire entre les deux bacs. Certains de ces renforts sont fixés au bac intérieur, et d'autres fixés au bac extérieur. Le volume intercalaire est souvent de faible largeur, ce qui oblige à utiliser des renforts présentant un rapport approprié entre leur hauteur et leur inertie. Toutefois on constate que l'aménagement de ces renforts sur le bac intérieur n'empêche pas une flexion sensible de la tôle constitutive de la paroi de ce bac entre deux renforts consécutifs, cette flexion aboutissant à des déformations et des plissements indésirables.

Par ailleurs, il est souhaitable, d'une part que les parois des bacs soient relativement minces afin de constituer une masse thermique faible, donc qui ne tende pas à provoquer la vaporisation de l'azote liquide, et d'autre part que ces parois soient suffisamment résistantes pour ne pas subir de flexion sous la poussée de la pression atmosphérique sur les parois du bac extérieur. Il s'agit donc d'impératifs contradictoires.

L'invention a pour but de proposer une solution satisfaisante à ce problème en réalisant un bac d'immersion agencé de manière que ses parois ne subissent pas de flexion lorsque le volume interparois est mis sous vide, tout en n'étant pas trop épaisses afin de contribuer à un bilan thermique satisfaisant du bac.

Conformément à l'invention, le volume intercalaire entre les deux parois des bacs intérieur et extérieur contient une structure de renfort régulièrement répartie sur sensiblement l'ensemble de la surface des parois des deux bacs, de manière à maintenir constant l'espacement entre les parois.

Suivant une caractéristique complémentaire, ladite structure de renfort est solidarisée avec la paroi du bac intérieur et libre par rapport à la paroi du bac extérieur. Cette absence de solidarisation de la structure avec la paroi du bac extérieur autorise donc un mouvement relatif entre les deux bacs, généré par des différences de contraction thermique des deux parois. Les deux bacs peuvent alors se contracter différemment l'un par rapport à l'autre, sans entraîner des déformations visibles.

Suivant un mode de réalisation préféré, la structure de renfort est du type à nid d'abeille et est formée par des plaques disposées sur tout le pourtour du bac intérieur et sous le fond de celui-ci ; des ouvertures sont ménagées dans une plaque latérale pour une tuyauterie d'alimentation en liquide cryogénique et dans la plaque disposée sous le fond pour le passage d'une vanne de purge.

Une structure à nid d'abeille solidarisée par exemple par collage avec la paroi du bac intérieur permet de maintenir la planéité de chaque paroi des bacs extérieur et intérieur après la mise sous vide de l'espace intercalaire.

D'autres particularités et avantages de l'invention apparaîtront au cours de la description qui va suivre, faite en référence aux dessins annexés qui en illustrent une forme de réalisation à titre d'exemple non limitatif.

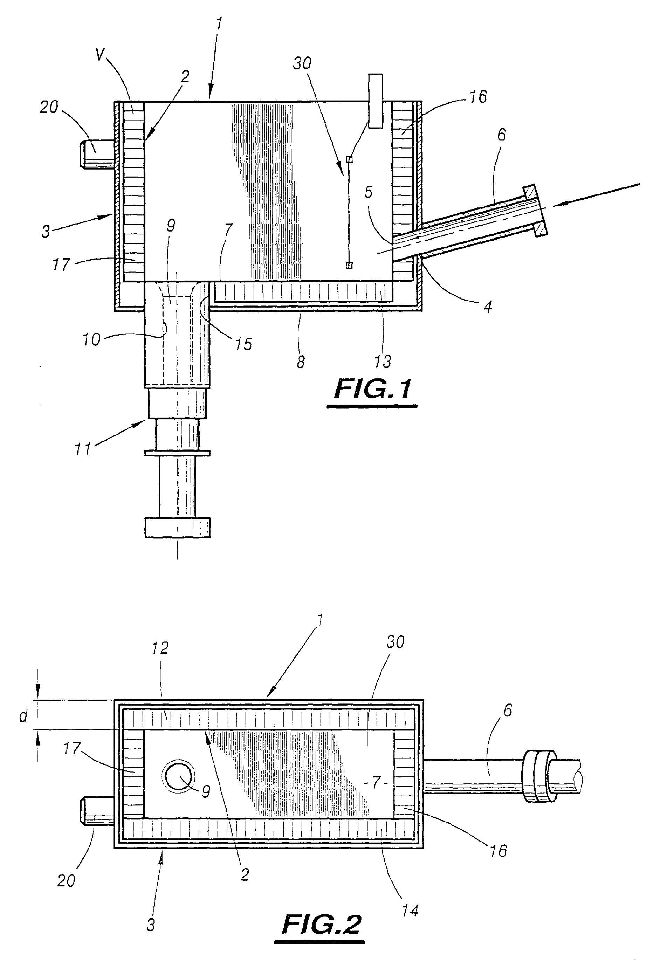

La figure 1 est une vue en élévation longitudinale à échelle réduite d'une forme de réalisation du bac d'immersion de produits notamment alimentaires conforme à l'invention.

La figure 2 est une vue de dessous du bac d'immersion de la figure 1.

La figure 3 est une vue en plan de trois panneaux en structure de nid d'abeille pouvant être disposés sur trois des côtés du bac d'immersion des figures 1 et 2.

La figure 4 est une vue de dessus partielle à échelle agrandie suivant la flèche G de la figure 3.

On a représenté aux dessins un bac 1 d'immersion de produits, notamment alimentaires dans un liquide cryogénique tel que l'azote liquide, destiné à faire partie d'une chaîne de fabrication de tels produits, non représentée.

Le bac 1, de forme générale parallépipédique comprend un bac intérieur 2 disposé dans un bac extérieur 3 avec entre les parois de ces deux bacs un volume intercalaire V destiné à être mis sous vide. Les parois de l'une des faces du bac 1 sont percées d'ouvertures 4, 5 respectives d'introduction d'une tuyauterie 6 d'alimentation du bac intérieur 1 en liquide cryogénique. Les fonds 7, 8 des bacs 2, 3 sont percés d'ouvertures 9, 10 de passage d'une vanne de purge 11, connue en soi et qui ne nécessite pas de description.

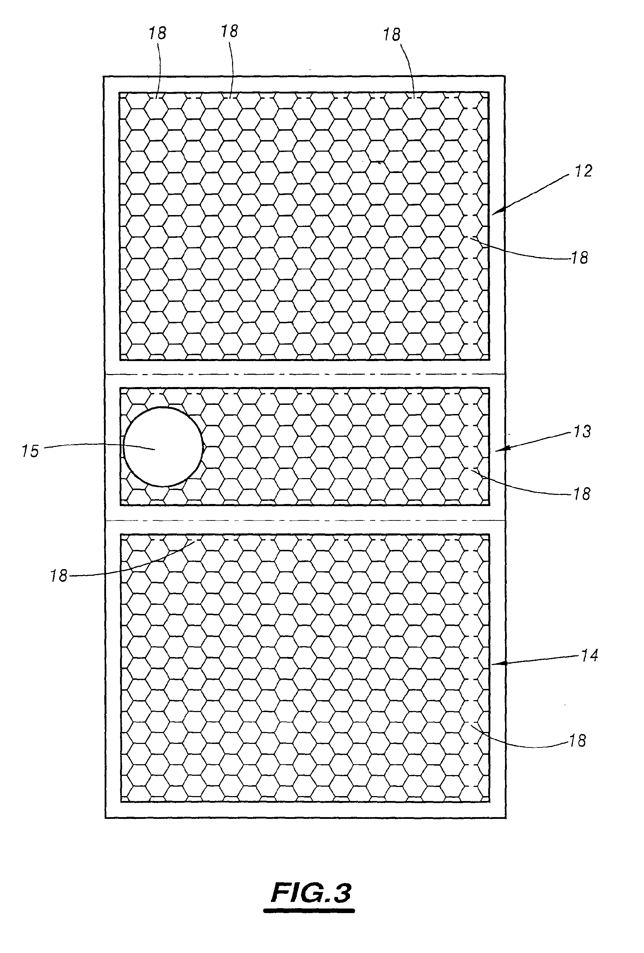

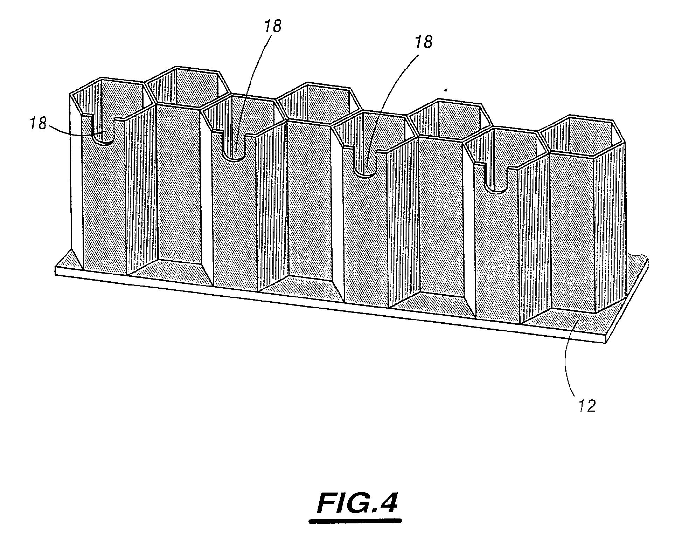

Le volume intercalaire V contient une structure de renfort régulièrement répartie sur sensiblement l'ensemblé de la surface des parois des bacs 2 et 3, de manière à maintenir constant l'espacement entre ces parois. Dans le mode de réalisation représenté aux figures 3 et 4, cette structure de renfort est du type à nid d'abeille, formée par des plaques 12, 13, 14. Les plaques 12 et 14 sont identiques et dimensionnées pour recouvrir deux grandes faces longitudinales opposées du bac intérieur 1, tandis que la plaque 13, de plus petite dimension, est dimensionnée pour pouvoir être disposée sous le fond 7 du bac intérieur 1 dans le volume intercalaire V. La plaque 13 est percée d'une ouverture 15 coaxiale aux ouvertures 9 et 10 et adaptée pour permettre le passage de la vanne de purge 11. Les structures en nid d'abeille des plaques 12, 13, 14 sont bien connues en soi et ne nécessitent pas de description détaillée.

Des plaques complémentaires à structures en nid d'abeille 16 et 17 sont dimensionnées pour pouvoir recouvrir les petites faces opposées du bac intérieur 1, entre les grandes faces recouvertes des plaques 12 et 14.

Les structures de renfort constituées par ces différentes plaques 12, 13, 14, 16, 17 sont solidarisées avec les parois correspondantes du bac intérieur 1, et maintenues avec un certain écartement par rapport aux parois du bac extérieur 3. Cette solidarisation peut être réalisée par exemple par collage sur les parois du bac intérieur 1. La plaque 16 est ajourée convenablement afin de pouvoir être traversée par la tuyauterie d'alimentation 6. L'une des parois du bac extérieur 3 est munie d'un embout 20 pour le pompage du gaz dans l'espace intercalaire V afin de le mettre sous vide, et un système 30 de régulation du niveau de l'azote liquide, connu en soi, est disposé dans le bac intérieur 1.

Suivant une particularité avantageuse de l'invention, des perforations 18 sont agencées dans la structure de renfort constituée par les différentes plaques 12, 13, 14... (figures 3, 4), suivant au moins deux directions perpendiculaires, à savoir le bac 1 étant disposé sur un plan horizontal, suivant la verticale et suivant la direction horizontale. Cet ensemble de perforations 18 dans les parois de deux rangées au moins d'alvéoles dans chaque plaque en nid d'abeille facilite la circulation gazeuse et par conséquent la mise sous vide du volume intercalaire V.

Les structures en nid d'abeille 12, 13, 14 ... peuvent être réalisées par exemple en aluminium.

Le fait que les structures 12, 13, 14, 16, 17 soient collées sur les tôles du bac intérieur 2 et libres par rapport aux tôles du bac extérieur 3 autorise un mouvement relatif entre les deux bacs, car ceux-ci peuvent en effet se contracter différemment l'un par rapport à l'autre, sans que cette différence de contraction n'entraîne de déformation visible des parois planes constitutives des bacs 1 et 2. Egalement, ces structures ne créent pas de traces sur les parois des bacs 2, 3 contrairement aux tôles de l'art antérieur.

Par ailleurs, le fait que les structures de renfort 12, 13, 14 ..., en nid d'abeille dans le mode de réalisation représenté, soient uniformément réparties sur la quasi totalité de la surface des parois des bacs 1, 2 et présentent une faible inertie, ainsi qu'une faible surface de contact avec ces parois, s'oppose à toute variation sensible de l'écartement entre les parois des bacs intérieur 1 et extérieur 3. Cet agencement s'oppose ainsi à toute déformation ou flambage des parois et en particulier des parois du bac extérieur 3 sous la poussée de la pression atmosphérique, lorsque le volume intercalaire V est mis sous vide.

Ce renforcement permet de diminuer l'épaisseur des tôles des bacs intérieur 1 et extérieur 3, et cette diminution d'épaisseur permet à son tour d'améliorer les performances thermiques du bac. En effet plus une paroi est épaisse et plus elle tend à provoquer une vaporisation de l'azote liquide contenu dans le bac intérieur 1 car la masse thermique à maintenir à basse température est plus importante. Il en résulte que davantage d'azote liquide devient nécessaire pour maintenir cette masse de parois à très basse température. Un tel inconvénient est largement évité grâce à l'agencement des structures de renfort prévues par l'invention.

L'invention n'est pas limitée au mode de réalisation décrit et peut comporter des variantes d'exécution. Ainsi les structures en nid d'abeille pourraient être remplacées par toutes autres structures équivalentes, par exemple une structure constituée en quadrillage rectangulaire ou de forme géométrique quelconque mais offrant une faible surface de contact globale avec la tôle des parois du bac intérieur 1 tout en assurant une résistance mécanique convenable. Egalement les découpes et évidements 18 pourraient être ménagés suivant des directions non perpendiculaires.

## Revendications

1. Bac (1) d'immersion de produits notamment alimentaires dans un liquide cryogénique, comprenant un bac intérieur (2) disposé dans un bac extérieur (3) avec entre les parois de ces deux bacs un volume intercalaire (V) destiné à être mis sous vide, **caractérisé en ce que** le volume intercalaire contient une structure de renfort (12, 13, 14, 16, 17) régulièrement répartie sur sensiblement l'ensemble de la surface des parois des deux bacs, de manière à maintenir constant l'espacement (d) entre les parois, . ladite structure de renfort (12, 13, 14 ...) étant solidarisée avec les parois du bac intérieur (2) et libre par rapport aux parois du bac extérieur (3).

2. Bac selon la revendication 1, **caractérisé en ce que** ladite structure (12, 13...) est collée sur les parois du bac intérieur (2).

3. Bac selon l'une des revendications 1 ou 2, **caractérisé en ce que** ladite structure (12, 13,... 17) est du type à nid d'abeille et est formée par des plaques disposées sur tout le pourtour du bac intérieur (2) et sous le fond (7) de celui-ci, des ouvertures étant ménagées dans une plaque latérale (16) pour une tuyauterie (6) d'alimentation en liquide cryogénique et dans la plaque (13) disposée sous le fond (7) pour le passage d'une vanne de purge (11).

4. Bac selon l'une des revendications précédentes, **caractérisé en ce que** des perforations (18) sont agencées dans la structure de renfort (12, 13,... 17) suivant au moins deux directions perpendiculaires, afin de faciliter une circulation gazeuse et la mise sous vide du volume intercalaire (V) entre les parois.
